# EUROPÄISCHE PATENTSCHRIFT

(11) **EP 0 922 898 B1**
(45) Veröffentlichungstag und Bekanntmachung des Hinweises auf die Patenterteilung: **02.11.2005**
(21) Anmeldenummer: 98123203.6
(22) Anmeldetag: 05.12.1998
(51) Int. Cl.: F16L 37/12, F16L 37/20

(54) **Verschlusssystem für Chromatographiesäulen**
Closure system for chromatography columns
Système de fermeture pour colonnes de chromatographie

(30) Priorität: 12.12.1997 DE 19755244
(43) Veröffentlichungstag der Anmeldung: 16.06.1999
(73) Patentinhaber: Sanofi-Aventis Deutschland GmbH, 65929 Frankfurt am Main (DE)
(72) Erfinder: Enhsen, Alfons Dr., 64572 Büttelborn (DE); Watkowiak, Ralf, 65817 Eppstein (DE)

(56) Entgegenhaltungen:
- GB-A- 193 461
- US-A- 1 359 900
- US-A- 1 493 221
- US-A- 1 991 343

## Beschreibung

Die Erfindung betrifft ein Verbindungs- und Verschlußsystem für Chromatographiesäulen

Bei bis heute verwendeten Chromatographiesystemen sind vor allem Schraub- und Flanschanschlüsse zur Verbindung und zum Verschluß von Chromatographiesäulen in Gebrauch.

Schraubverschlüsse finden beispielsweise als Verschlüsse von Chromatographiesäulen aus Glas und Metall Verwendung. Bei diesen bekannten Verschlüssen werden sowohl das Säulenrohr als auch der sogenannte Säulenkopf mit einem entsprechenden Gewinde versehen (Innen- bzw. Außengewinde). Beide Teile werden dann samt zugehöriger Dichtung, die sich zumeist auf dem Ende des Säulenrohres befindet, durch entsprechende Drehbewegungen miteinander verschraubt. Zusammen mit der dazwischenliegenden Dichtung entsteht so eine druckdichte Verbindung.

Flanschanschlüsse finden ebenfalls als Verschlüsse von Chromatographiesäulen aus Glas und Metall Verwendung. Bei den bekannten Verschlüssen ist ein erster Ring aus Metall über das Glasrohr, das die Säule darstellt, geschoben und hinter dem Flansch, der das Glasrohr abschließt, angeordnet. Ein zweiter Ring ist in entsprechender Weise über das Verschlußteil, das den Gegenflansch bildet, geschoben. Beide Ringe sind mit umfangreichen Bohrungen versehen, so daß, wenn die Flansche samt zugehöriger Dichtung in ihre bestimmungsgemäße Position gebracht sind, die Ringe mittels Schrauben verbunden werden können, wobei die Flansche und die dazwischen liegende Dichtung gegeneinander gepreßt werden und eine druckdichte Verbindung entsteht. Der erste Flansch bildet dabei ein Lager, der zweite ein Gegenlager für die Schraubverbindung.

Diese bekannten Verbindungen haben den Nachteil, daß sie nur mit einem vergleichsweise hohen Zeitaufwand herzustellen und zu lösen sind. Daneben kommt oder durch Verkanten leicht zu Beschädigungen der Gewinde und damit verbunden zu Undichtigkeiten und Druckverlusten. Um erneut eine volle Funktionsfähigkeit der Verbindung herzustellen, müssen die Gewinde sowohl im Säulenrohr als auch im Säulenkopf überarbeitet werden. Die Flanschverbindungen haben den Nachteil, daß je nach Säulendurchmesser mehrere (meist 4 bis 10) Verschraubungen genau justiert und mit gleichem Drehmoment angezogen werden müssen, damit keine Spannungen in der Verschraubung auftreten, was besonders für das Arbeiten unter hohem Druck (HPLC) wichtig ist.

US Patent Nr. 1991343 beschreibt eine Flanschverbindung bestehend aus Zugelementen und Gegenlagern, wobei die Zugelemente jeweils an einem Ende in die Lager eingreifen und die jeweils anderen Enden gelenkig gelagert sind. Die in US 1991343 vorgeschlagene Flanschverbindung ist hinsichtlich des gegebenen Flanschabstandes an relativ enge Grenzen gebunden.

Hier will die vorliegende Erfindung abhelfen und eine flexible, einfache, schnell und sicher zu bedienende Flanschverbindung bereitstellen.

Diese Aufgabe wird durch eine Vorrichtung gemäß dem Hauptanspruch gelöst. Gegenstand der Erfindung ist daher eine Vorrichtung zum Herstellen einer Flanschverbindung, aufweisend ein Lager, das an einem ersten Flansch angreifen kann, ein Gegenlager, das an einem zweiten Flansch angreifen kann, sowie Mittel zum Verbinden der beiden Lager dadurch gekennzeichnet, daß
das Zugelement an seinem ersten Ende ein Gewinde aufweist und mittels Muttern in dem Lager befestigt werden kann,
daß das Gegenlager eine Aussparung für das Zugelement aufweist und
daß, bei Bewegung des oder jeden zweiten Endes des oder jeden Hebels in eine Endstellung, das oder jedes Zugelement sich in die oder jede Aussparung einfügt.

Bevorzugte Ausführungsformen der Erfindung ergeben sich aus den Unteransprüchen. Es können auch einzelne oder mehrere der in den Unteransprüchen offenbarten Ausführungsformen jeweils für sich oder in Kombination Lösungen der zugrundeliegenden Aufgabe darstellen und es sind auch die einzelnen Merkmale innerhalb der Anspruchskategorien beliebig kombinierbar.

Das Zugelement kann eine Stange aus Metall sein, die an ihrem ersten Ende ein Gewinde aufweist und mittels Muttern in dem Lager befestigt werden kann. Es kann aber auch eine genügend starke Feder aus Metall als Zugelement verwendet werden. In einer bevorzugten Ausgestaltung sind zwei Zugelemente über einen gemeinsamen Hebel verbunden.

Als Werkstoffe kommen die üblichen metallischen Werkstoffe in Frage, vorzugsweise rost- und/oder säurebeständige Stähle, sowie Kunststoffe, vorzugsweise hochfeste. Der äußere Durchmesser der Lager kann im Bereich von 50 bis 150 mm, aber auch darüber liegen.

Die erfindungsgemäße Vorrichtung hat unter anderem den Vorteil, daß eine gleichmäßige Einstellung der Zugelemente nur einmal erforderlich ist, so daß das weitere Verschließen schneller und ohne daß Undichtigkeiten auftreten durchgeführt werden kann. Die erfindungsgemäße Vorrichtung eignet sich besonders zum Verbinden von Rohren, seien sie aus Glas oder Metall oder Kunststoff, mit einem Innendurchmesser bevorzugt aus dem Bereich von 20 bis 100 mm, aber auch größer. Ein bevorzugter Anwendungsbereich liegt in der Mitteldruckchromatographie, das heißt im Verbinden oder Verschließen von Chromatographiesäulen, die einem Innendruck aus dem Bereich von 1 bis ca. 40 bar standhalten müssen. Hier können im Technikumsmaßstab Innendurchmesser bis 500 mm auftreten.

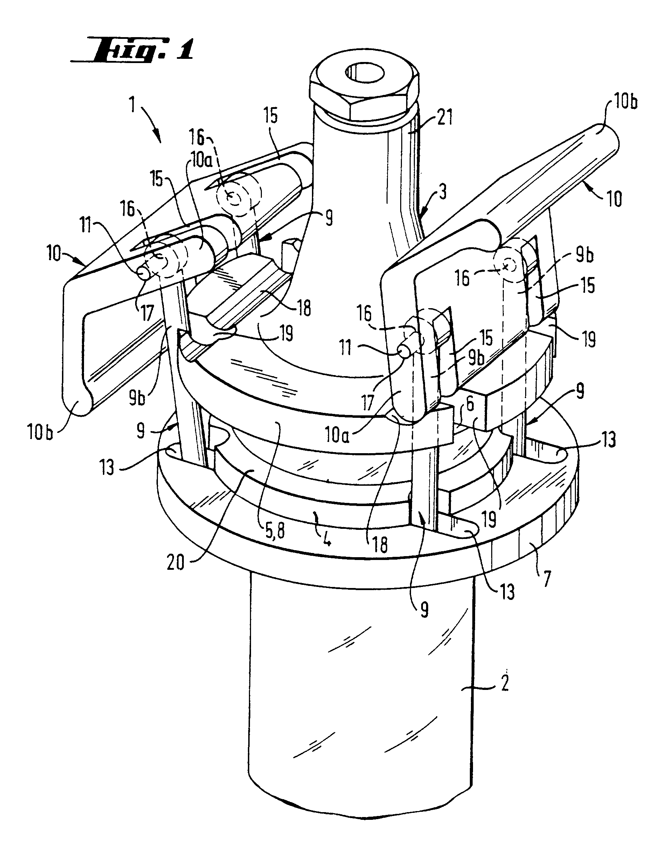

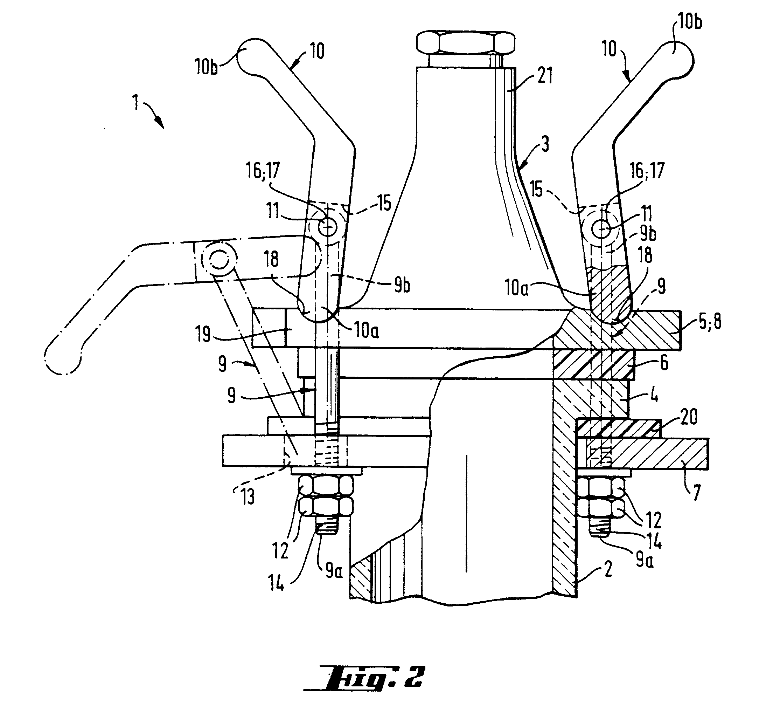

Im folgenden wird eine beispielhafte Ausgestaltung der Erfindung anhand der Figuren 1 und 2 näher beschrieben. Eine Beschränkung der Erfindung in irgendeiner Weise ist dadurch nicht beabsichtigt.

Es zeigt:
- Fig. 1:: eine schematische Darstellung einer Chromatographiesäule, verschlossen mit Hilfe einer erfindungsgemäßen Vorrichtung in perspektivischer Seitenansicht,
- Fig. 2:: die Verschlußvorrichtung aus Fig. 1 in Seitenansicht, teilweise geschnitten.

In Fig. 1 ist dargestellt, wie durch eine erfindungsgemäße Verschlußvorrichtung 1 eine Chromatographiesäule 2, im vorliegenden Fall ein Glasrohr, mittels einer Metallkappe 3 verschlossen ist. Das Glasrohr 2 hat einen ersten Flansch 4, die Metallkappe den passenden zweiten Flansch 5. Zwischen diesen beiden Flanschen ist im geschlossenen Zustand eine Dichtung 6 eingesetzt. Die Verschlußvorrichtung 1 besteht aus einem ersten Metallring 7, der hinter dem ersten Flansch 4 angeordnet ist und als Lager wirkt, einem zweiten Metallring 8, der in diesem Beispiel mit dem zweiten Flansch 5, der an einem Verschlußstück 21 angebracht ist, identisch ist und als Gegenlager wirkt, vier Zugmitteln, die als Stangen 9 ausgebildet sind, zum Verbinden der Metallringe (7,8) zwei Hebeln 10 sowie aus Bolzen 11 und Muttern 12.

In den Metallring 7 sind entsprechend der Zahl der Stangen 9 vier Löcher 13 eingearbeitet. Durch diese Löcher 13 sind die Stangen 9 mit ihrem ersten Ende, das ein Gewinde 14 aufweist, eingesteckt und mittels der Muttern 12 fixiert. Das zweite Ende der Stangen weist Bohrungen 16 auf und ist in Aussparungen 15 der Hebel 10 mittels Bolzen 11, die in die Bohrungen 16 und entsprechende Bohrungen 17 in den Hebeln 10 eingreifen, gelenkig gelagert. Die Hebel 10 sind so ausgestaltet, daß sie je zwei Stangen 9 aufnehmen können, wodurch die zwei Stangen 9 gleichzeitig betätigbar sind. Weiter sind die Stangen 9 beim Betätigen der Verschlußvorrichtung in den Aussparungen 15 geführt und erstrecken sich in der Endstellung (Verschlußstellung) in diesen Aussparungen 15. Zur einfacheren Handhabung sind die Hebel 10 winkelig ausgeführt.

In den zweiten Metallring 8 sind zwei Nuten 18 eingefräßt, die als Ansatzstellen für die Hebel 10 dienen. Außerdem sind in den entsprechenden Gegenpositionen zu den Löchern 13 Ausnehmungen 19 vorhanden. Um Beschädigungen von Glasteilen, insbesondere des Flansches 4, zu vermeiden, ist zwischen dem ersten Flansch 4, der in diesem Beispiel aus Glas besteht, und dem Metallring 7 ein Ring 20 aus elastischem Material, vorzugsweise aus Kunststoff, eingesetzt.

## Patentansprüche

1. Vorrichtung (1) zum Herstellen einer Flanschverbindung, aufweisend ein Lager (7), das an einem ersten Flansch (4) angreifen kann, ein Gegenlager (8), das an einem zweiten Flansch (5) angreifen kann, sowie Mittel zum Verbinden der beiden Lager (7,8), wobei
die Mittel als Hebel (10) mit Zugelement (9) ausgeführt sind, wobei Zugelement (9) und Hebel (10) je ein erstes (a) und zweites (b) Ende (9a, 9b, 10a, 10b) haben,
das Zugelement (9) mit seinem ersten Ende (9a) in das Lager (7) eingreifen kann und sein zweites Ende (9b) zwischen dem ersten (10a) und zweiten Ende (10b) des Hebels (10) gelenkig gelagert ist,
das Gegenlager (8) mindestens eine Ansatzstelle (18) für das erste Ende (10a) des Hebels (10) aufweist und
die Mittel derart ausgelegt sind, daß beim bestimmungsgemäßen Betätigen der Vorrichtung (1) das oder jedes Zugelement (9) in das Lager (7) und das oder jedes erste Ende (10a) des oder jeden Hebels (10) in die oder jede Ansatzstelle (18) des Gegenlagers (8) eingreift, und, bei Bewegung des oder jeden zweiten Endes (10b) des oder jeden Hebels (10) in eine Endstellung, wobei das oder jedes erste Ende (10a) in der oder jeder Ansatzstelle (18) verbleibt, das oder jedes Zugelement (9) ersten und zweiten Flansch zu einer druckdichten Verbindung zusammenpreßt, **dadurch gekennzeichnet, daß** das Zugelement (9) an seinem ersten Ende (9a) ein Gewinde aufweist und mittels Muttern in dem Lager (7) befestigt werden kann, daß das Gegenlager (8) eine Aussparung (19) für das Zugelement (9) aufweist und daß, bei Bewegung des oder jeden zweiten Endes (106) des oder jeden Hebels (10) in eine Endstellung, das oder jedes Zugelement (9) sich in die oder jede Aussparung (19) einfügt.

2. Vorrichtung nach Anspruch 1, **dadurch gekennzeichnet, daß** das Lager (7) und der erste Flansch (4) identisch sind.

3. Vorrichtung nach Anspruch 1 oder 2, **dadurch gekennzeichnet, daß** das Gegenlager (8) und der zweite Flansch (5) identisch sind.

4. Vorrichtung nach mindestens einem der Ansprüche 1 bis 3, **dadurch gekennzeichnet, daß** die Vorrichtung vier Zugelemente (9) aufweist, von denen je zwei über einen gemeinsamen Hebel (10) verbunden sind.

5. Vorrichtung nach mindestens einem der Ansprüche 1 bis 4, **dadurch gekennzeichnet, daß** die Zugelemente (9) Stangen sind.

6. Vorrichtung nach mindestens einem der Ansprüche 1 bis 4, **dadurch gekennzeichnet, daß** die Zugelemente (9) Metallfedern sind.

## Claims

1. Device (1) for establishing a flange connection, having a bearing (7) which can act on a first flange (4), a counter-bearing (8) which can act on a second flange (5), and also means for connecting the two bearings (7, 8), in which
the means are provided in the form of a lever (10) with a drawing element (9), the drawing element (9) and lever (10) each having a first (a) and second (b) end (9a, 9b, 10a, 10b),
the drawing element (9) can engage with its first end (9a) into the bearing (7) and its second end (9b) is jointedly mounted between the first (10a) and second (10b) ends of the lever (10),
the counter-bearing (8) has at least one contact location (18) for the first end (10a) of the lever (10) and
the means are designed in such a way that, when the device (1) is operated in the intended manner, the drawing element (9) or each drawing element engages in the bearing (7) and the first end (10a) or each first end of the lever (10) or each lever engages in the contact location (18) or each contact location of the counter-bearing (8), and, when the second end (10b) or each second end of the lever (10) or each lever moves into an end position; the first end (10a) or each first end remaining in the contact location (18) or each contact location, the drawing element (9) or each drawing element presses the first and second flanges together to form a pressure-tight connection, **characterized in that** the drawing element (9) has a thread at its first end (9a) and can be fastened in the bearing (7) by means of nuts, **in that** the counter-bearing (8) has a recess (19) for the drawing element (9) and **in that**, when the second end (10b) or each second end of the lever (10) or each lever moves into an end position, the drawing element (9) or each drawing element fits into the recess (19) or each recess.

2. Device according to Claim 1, **characterized in that** the bearing (7) and the first flange (4) are identical.

3. Device according to Claim 1 or 2, **characterized in that** the counter-bearing (8) and the second flange (5) are identical.

4. Device according to at least one of Claims 1 to 3, **characterized in that** the device has four drawing elements (9), of which two are respectively connected by means of a common lever (10).

5. Device according to at least one of Claims 1 to 4, **characterized in that** the drawing elements (9) are bars.

6. Device according to at least one of Claims 1 to 4, **characterized in that** the drawing elements (9) are metal springs.

## Revendications

1. Dispositif (1) pour établir une liaison par bride, qui présente un support (7) qui peut être engagé sur une première bride (4), un support complémentaire (8) apte à être engagé sur une deuxième bride (5) et des moyens de liaison des deux supports (7, 8), dans lequel
les moyens sont configurés comme leviers (10) dotés d'éléments de traction (9), les éléments de traction (9) et les leviers (10) présentant chacun une première extrémité (a) et une deuxième extrémité (b) (9a, 9b, 10a, 10b),
la première extrémité (9a) de l'élément de traction (9) peut s'engager dans le support (7) tandis que la deuxième extrémité (9b) de l'élément de traction est montée à articulation entre la première extrémité (10a) et la deuxième extrémité (10b) du levier (10),
le support complémentaire (8) présente au moins un emplacement d'appui (18) pour la première extrémité (10a) du levier (10) et
les moyens sont configurés de telle manière que, lorsque le dispositif (1) est utilisé correctement, le ou les éléments de traction (9) s'engagent dans le support (7) et la ou les premières extrémités (10a) du ou des leviers (10) s'engagent dans le ou les emplacements d'appui (18) respectifs du support complémentaire (8) et de telle manière que, lorsque la ou les deuxièmes extrémités (10b) du ou des leviers (10) sont déplacées en position extrême, la ou les premières extrémités (10a) se trouvent dans le ou les emplacements d'appui (18) respectifs et compriment ensemble la première et la deuxième bride pour former une liaison étanche, **caractérisé en ce que** la première extrémité (9a) de l'élément de traction (9) présente un filet et peut être fixée dans le support (7) au moyen d'écrous, **en ce que** le support complémentaire (8) présente un évidement (19) pour l'élément de traction (9) et **en ce que**, lorsque la ou les deuxièmes extrémités (10b) du ou des leviers (10) sont déplacées en position extrême, le ou les éléments de traction (9) pénètrent dans le ou les évidements (19).

2. Dispositif selon la revendication 1, **caractérisé en ce que** le support (7) et la première bride (4) sont identiques.

3. Dispositif selon les revendications 1 ou 2, **caractérisé en ce que** le support complémentaire (8) et la deuxième bride (5) sont identiques.

4. Dispositif selon au moins l'une des revendications 1 à 3, **caractérisé en ce qu'**il présente quatre éléments de traction (9) reliés par paires au moyen d'un levier commun (10).

5. Dispositif selon au moins l'une des revendications 1 à 4, **caractérisé en ce que** les éléments de traction (9) sont des tiges.

6. Dispositif selon au moins l'une des revendications 1 à 4, **caractérisé en ce que** les éléments de traction (9) sont des ressorts métalliques.
